# EUROPÄISCHE PATENTANMELDUNG

(11) **EP 4 741 201 A1**
(43) Veröffentlichungstag der Anmeldung: **13.05.2026**
(21) Anmeldenummer: 24211940.2
(22) Anmeldetag: 09.11.2024
(51) Int. Cl.: B60K 7/00, B60K 17/04, F16D 71/00

(54) **ANTRIEB, TRANSPORTFAHRZEUG UND VERWENDUNG**

(71) Anmelder: STXI Motion Ltd, 4913020 Petach Tikva (IL)
(72) Erfinder: VOLLHARDT, Henrik, 4913020 Petach Tikva (IL); ERLICH, Markus, Dr., 4913020 Petach Tikva (IL)
(74) Vertreter: Michalski Hüttermann & Partner Patentanwälte mbB

(57) **Zusammenfassung**

Die Erfindung betrifft einen Antrieb (2) für ein radangetriebenes Fahrzeug, aufweisend ein Planetengetriebe (20) mit einem Sonnenrad (22), einem Hohlrad (24), einem Planetenradträger (26) und von dem Planetenradträger (26) getragene und mit Sonnenrad (22) und Hohlrad (24) kämmende Planetenräder (28); einen Elektromotor (10) zum Antreiben des Sonnenrads (22); ein mit dem Hohlrad (24) drehfest verbundenes Rad (70); und
eine elektromechanische Bremse (50) zum Bremsen des Sonnenrads (22) und/oder einer das Sonnenrad (22) bereitstellenden Antriebswelle (12) des Elektromotors (12),
wobei das Sonnenrad (22) zwischen der Bremse (50) und dem Elektromotor (10) angeordnet ist und/oder die Bremse (50) von einer Axialausnehmung des Planetengetriebes (20) aufgenommen ist.

## Beschreibung

Die folgenden Aspekte beziehen sich auf einen Antrieb für ein radangetriebenes Fahrzeug, wobei der Antrieb ein Planetengetriebe, einen Elektromotor und ein Rad umfasst; auf ein fahrerloses Transportfahrzeug mit einem Antrieb; und auf eine Verwendung eines Antriebs.

Aus dem Stand der Technik ist bekannt, dass radangetriebene Fahrzeuge Antriebe erfordern, die eine hohe Effizienz und Zuverlässigkeit gewährleisten. Bekannte Antriebe weisen jedoch Nachteile hinsichtlich ihrer baulichen Komplexität und Effizienz auf. Weiter sind bekannte Antriebe vergleichsweise groß bzw. wenig kompakt.

Es ist daher eine Aufgabe, Lösungen bereitzustellen, mit denen nicht nur eine effiziente Kraftübertragung gewährleistet ist, sondern auch eine kompakte Integration ermöglicht wird. Insbesondere sollen die Nachteile des Standes der Technik vermieden oder aber zumindest im Wesentlichen reduziert werden.

Die vorliegende Aufgabe wird durch die Merkmale der unabhängigen Ansprüche gelöst. Vorteilhafte Ausführungsformen sind in den Unteransprüchen, der Beschreibung und den Zeichnungen definiert. Soweit technisch möglich, können die Offenbarungen der Beschreibung, der Zeichnungen und der Ansprüche nach Belieben untereinander kombiniert werden.

Insbesondere wird die Aufgabe durch einen Antrieb für ein radangetriebenes Fahrzeug gelöst, aufweisend
ein Planetengetriebe mit einem Sonnenrad, einem Hohlrad, einem Planetenradträger und von dem Planetenradträger getragene und mit Sonnenrad und Hohlrad kämmende Planetenräder;
einen Elektromotor zum Antreiben des Sonnenrads;
ein mit dem Hohlrad drehfest verbundenes Rad; und
eine elektromechanische Bremse zum Bremsen des Sonnenrads und/oder einer das Sonnenrad bereitstellenden Antriebswelle des Elektromotors
wobei das Sonnenrad zwischen der Bremse und dem Elektromotor angeordnet ist und/oder die Bremse von einer Axialausnehmung des Planetengetriebes und/oder von dem Rad bzw. im Rad aufgenommen ist.

Mit anderen Worten, beispielsweise, betrifft die Erfindung einen elektrischen Radantrieb. Der Radantrieb umfasst einen Motor und ein Umlaufgetriebe mit einem durch den Motor angetriebenen Sonnenrad, einem Hohlrad, und einem Planetenradträger, der mehrere Planetenräder hält, welche mit dem Sonnenrad und dem Hohlrad in Eingriff stehen. Das Hohlrad ist direkt oder indirekt mit einem Rad bzw. Reifen, beispielsweise Gummireifen oder Kunststoffreifen, verbunden, das/der die vom Motor ausgehende und über das Umlaufgetriebe übertragene Antriebskraft auf einen Untergrund überträgt. Zudem ist eine Bremse vorgesehen, die eine Bremskraft über das Planetengetriebe in das Rad einbringen kann. Die Bremse ist kompakt im Rad bzw. abseits vom Elektromotor angeordnet, wodurch sie insbesondere gut zugänglich ist.

Die vorgeschlagene Lösung soll einen möglichst kompakten Antrieb schaffen. Indem das Rad gemeinsam mit dem Hohlrad rotieren kann bzw. drehfest damit verbunden ist, und insbesondere nicht mit dem Planetenradträger oder dem Sonnenrad, kann die axiale Baulänge des Antriebs reduziert werden. Im Grunde kann das Rad das Hohlrad umgeben und direkt oder indirekt drehmomentübertragend damit verbunden sein.

Durch die drehfeste Verbindung von Rad und Hohlrad wird der radial zur Verfügung stehende Bauraum bestmöglich genutzt. Insbesondere können Lager und weitere Komponenten platzsparend positioniert werden und eine Reduzierung der axialen Baulänge kann erreicht werden.

Beispielsweise ist es bei vorbekannten Antrieben oftmals so, dass der Planetenradträger mit dem Rad verbunden vorgesehen ist, wobei der Elektromotor mit dem Sonnenrad verbunden vorgesehen ist. Meist ist das Hohlrad stillstehend vorgesehen und insbesondere fest mit dem Elektromotor verbunden. Von diesem bekannten Konzept abweichend wurde mit Zustandekommen der Erfindung erkannt, dass es möglich ist, das Hohlrad drehfest mit dem Radzu verbinden. Insbesondere können bei einem zweiwangigen Planetenradträger jeweils ein Lager auf einer der Wangen des Planetenradträgers angeordnet sein, so dass hohe radiale Lasten ermöglicht werden und ein Biegemoment bzw. ein Kippmoment am Antrieb reduziert werden kann.

Die vorgeschlagene Lösung lässt es - je nach Konstruktion - möglicherweise zu, dass durch das Rad hindurch ein Zugriff auf das Planetengetriebe erfolgen kann, beispielsweise zur Wartung. Die Bremse ist zur Wartung leicht zugänglich angeordnet.

Ein Antrieb bezeichnet beispielsweise eine Vorrichtung oder ein System, das zur Bereitstellung von Antriebskraft bzw. Drehmoment auf ein oder mehrere Räder bzw. Traktionsräder eines Fahrzeugs dient. Insbesondere handelt es sich bei dem Antrieb um einen Radnabenantrieb, Radnabenmotor bzw. Nabengetriebemotor. Typischerweise kann der Antrieb elektrische Energie in mechanische und thermische Energie wandeln. Dabei kann der Antrieb verschiedene mechanische und elektrische Komponenten umfassen, die zusammenwirken, um eine Fortbewegung eines Fahrzeugs zu ermöglichen. Beispielsweise weist der Antrieb zumindest einen Motor, zumindest ein Rad und zumindest ein Getriebe zur Verbindung von Motor mit Rad auf. Der Antrieb, insbesondere Motor und/oder Getriebe, kann strukturtragend ausgebildet sein, um einen Teil des Fahrzeuggewichts zu tragen. Die Art des Fahrzeugs umfasst insbesondere solche Fahrzeuge, die von bzw. an Rädern bzw. Traktionsrädern angetrieben werden können. Als radangetriebenes Fahrzeug versteht sich beispielsweise ein solches, bei dem die Fortbewegung des Fahrzeugs durch ein Antreiben eines oder mehrerer seiner Traktionsräder bewirkt wird. Beispielsweise ist das Fahrzeug selbstfahrend bzw. zum fahrerlosen Fahren eingerichtet.

Ein Planetengetriebe oder Umlaufgetriebe ist ein Getriebe, bei dem ein Zahnrad bzw. Planetenrad oder mehrere Zahnräder bzw. Planetenräder in ein zentrales Zahnrad bzw. Ritzel bzw. Sonnenrad und gleichzeitig in ein äußeres Zahnrad bzw. Hohlrad eingreifen. Insbesondere ist ein einstufiges Planetengetriebe vorgesehen, wobei ein zwei- oder mehrstufiges Planetengetriebe möglich ist. Das Sonnenrad und/oder das Hohlrad kann/können durch einen Abschnitt einer Welle, beispielsweise Antriebswelle oder Motorwelle, gebildet sein oder darauf aufgesteckt sein. Das Sonnenrad kann integral mit der Antriebswelle ausgebildet sein. Die meist zwei, drei oder mehr Planetenräder sind typischerweise durch einen Planetenradträger jeweils parallel zueinander drehbar gehalten. Das Sonnenrad, der Planetenradträger und/oder das Hohlrad kann/können eine Drehachse des Getriebes definieren. Die Planetenräder sind typischerweise parallel zur Drehachse rotierbar.

Das Planetengetriebe dient insbesondere zur Übertragung und Umwandlung von Drehmomenten und Drehzahlen. Es zeichnet sich durch eine kompakte Bauweise und eine hohe Übersetzungsvielfalt aus. Beispielsweise kann ein Antriebsmoment in das Sonnenrad eingekoppelt und das Rad am Planetenradträger oder am Hohlrad angebunden sein, wobei Hohlrad oder Planetenradträger feststehend angeordnet sein kann.

Das Planetengetriebe ist vorzugsweise evolventisch verzahnt. Bevorzugt sind einfach herstellbare Geradverzahnungen vorgesehen. Eine Schrägverzahnung ist auch möglich, beispielsweise um Geräusche zu reduzieren. Weiter bevorzugt ist, gleich ob gerad- oder schrägverzahnt, eine modifizierte Evolventenverzahnung vorgesehen, um die Herstellung der Verzahnung zu vereinfachen. Typischerweise sind die Verzahnungen aus Stahl gebildet, um möglichst langlebig zu sein.

Das Sonnenrad kann, insbesondere direkt, durch den Elektromotor angetrieben werden. Das Hohlrad umgibt beispielsweise die Planetenräder und das Sonnenrad und kämmt direkt mit den Planetenrädern. Insbesondere hält der Planetenradträger die Planetenräder, die gleichzeitig mit dem Sonnenrad und dem Hohlrad kämmen können.

Der Elektromotor bzw. elektrische Maschine wandelt elektrische Energie in mechanische Energie bzw. eine Drehbewegung um. Er ist bevorzugt direkt oder indirekt mit dem Sonnenrad verbunden und sorgt durch seine Rotationsbewegung dafür, dass das Planetengetriebe angetrieben wird. Typischerweise ist der Elektromotor als Synchromotor oder alternativ als Asynchronmotor oder Gleichstrommotor ausgebildet. Der Elektromotor wird typischerweise mit einem Servorumrichter bzw. Wechselrichter angetrieben..

Das Rad soll beispielsweise die Kraftübertragung vom Elektromotor über das Planetengetriebe auf den Untergrund sicherstellen, um das Fahrzeug zu bewegen. Das Rad kann ein eine Felge und einen auf die Felge aufgezogenen oder aufgebrachten Radbelag aufweisen. Das Rad ist direkt oder indirekt mit dem Hohlrad des Planetengetriebes drehfest verbunden, beispielsweise so dass die Drehbewegung des Hohlrads direkt bzw. eins-zu-eins auf das Rad übertragen werden kann. Beispielsweise ist das Rad aus einem flexiblen Material, z.B. Kunststoff, Gummi bzw. Elastomerwerkstoff und/oder Polyurethan-Elastomer bzw. hochelastisches, vernetztes Polyurethan-Elastomer, gebildet, um am Untergrund zu haften. Das Rad kann außenseitig eine Profilierung bzw. ein Profil aufweisen oder als Slick ausgebildet sein.

Vorliegend werden vorteilhafte Aspekte und bevorzugte Abwandlungen beschrieben und erklärt. Erklärungen, insbesondere zu Vorteilen und Definitionen von Merkmalen, sind von Natur aus beschreibende und bevorzugte, jedoch nicht einschränkende Beispiele. Ist eine Erklärung einschränkend, wird dies ausdrücklich erwähnt.

Alternativ oder zusätzlich kann vorgesehen sein, dass der Antrieb zumindest zwei Lager zur Lagerung des Hohlrads auf dem bzw. relativ zum Planetenradträger aufweist. Die zumindest zwei Lager können auf dem Planetenradträger angeordnet sein. Es können mehr als zwei Lager vorgesehen sein. Beispielsweise können als Lager Wälzlager, Gleitlager und/oder angere Lager vorgesehen sein. Insbesondere sind als als Wälzlager Kugellager, Rillenkugellager, Rollenlager, Zylinderrollenlager, Tonnenlager, Nadellager, Kegelrollenlager, Dünnringlager und/oder andere Lager vorgesehen. Ein Wälzlager weist typischerweise einen Innenring bzw. Lagerinnenring, einen Außenring bzw. Lageraußenring, und Wälzkörper zwischen Innen- und Außenring auf. Insbesondere sind zumindest im Wesentlichen identische bzw. baugleiche Lager als die zumindest zwei Lager vorgesehen. Die zumindest zwei Lager sind insbesondere abgedichtet ausgeführt, um einen in dem Planetengetriebe vorgesehenen Schmierstoff zurückzuhalten. Die zumindest zwei Lager ermöglichen eine stabile Lagerung des Hohlrads, wodurch eine erhöhte Betriebssicherheit und eine verlängerte Lebensdauer des Antriebs erreicht werden können.

Typischerweise weisen die zumindest zwei Lager jeweils einen Lagerinnenring auf, wobei die Lagerinnenringe auf dem Planetenradträger, insbesondere auf einer Wange des Planetenradträgers, angeordnet sind. Typischerweise weisen die zumindest zwei Lager jeweils einen Lageraußenring auf. Der Lageraußenring kann jeweils am Hohlrad anliegend angeordnet sein. Der Lagerinnenring und Lageraußenring sind jeweils typischerweise axial gesichert, z.B. mittels Sicherungsring.

Alternativ oder zusätzlich kann vorgesehen sein, dass der Planetenradträger mit zwei Wangen bzw. zweiwangig ausgeführt ist. Auf beiden Wangen bzw. auf jeder Wange des Planetenradträgers kann eines der zumindest zwei Lager angeordnet sein. Die Wangen können über zumindest einen Steg und/oder zumindest eine Planetenachse miteinander verbunden sein. Beispielsweise können drei Planetenachsen die Wangen verbinden. Das Sonnenrad und/oder die Planetenräder ist/sind insbesondere zwischen den Wangen angeordnet. Dies bietet eine möglichst symmetrische Lastverteilung und kann Verschleiß der Lager verringern. Typischerweise trägt der Planetenradträger die von den Lagern aufgenommene Aufstandskraft und leitet diese an das Fahrzeug weiter.

Alternativ oder zusätzlich kann vorgesehen sein, dass zumindest eines der zumindest zwei Lager zwischen zwei axialen Rändern des Rads angeordnet ist, vorzusgweise bereichsweise oder vollständig dazwischen angeordnet. Insoweit kann eines der Lager oder es können mehrere oder alle der Lager, bevorzugt bereichsweise oder vollständig, zwischen den zwei axialen Rändern des Rads angeordnet sein. Vorzugsweise ist eine zwischen allen Lagern der zumindest zwei Lager befindliche erste axiale Mitte zwischen den zwei axialen Rändern des Rads angeordnet. Die erste axiale Mitte bezieht sich insbesondere auf einen axialen Lagerschwerpunkt, der beispielsweise bei zwei Lagern etwa mittig zwischen beiden Lagern liegt.

Alternativ oder zusätzlich kann vorgesehen sein, dass die erste axiale Mitte mit einer zweiten axialen Mitte des Rades zumindest im Wesentlichen übereinstimmt, bevorzugt um höchstens 40 % oder höchtens 20 % oder höchstens 10 % einer axialen Breite des Rades abseits von der zweiten Mitte positioniert ist. In anderen Worten, beispielsweise, soll der Lagerschwerpunkt etwa mittig zwischen den Rändern des Rad angeordnet sein oder um höchstens einen bestimmten Anteil einer Radbreite davon abweichend.

Beispielsweise ist der Lagerschwerpunkt bzw. die Mitte der Lager außermittig, beispielsweise zwischen 40 % und 80 %, bevorzugt zwischen 50 % und 70 %, insbesondere zwischen 60 % und 65 %, der Breite einer Aufstandsfläche des Rads angeordnet. Die Breite der Aufstandsfläche ist typischerweise durch den Abstand der Ränder des Rads zueinander in axialer Richtung definiert. Die zweite axiale Mitte findet sich beispielsweise mittig bezüglich der Breite der Aufstandsfläche.

Alternativ oder zusätzlich kann vorgesehen sein, dass eine Innenverzahnung des Hohlrads in axialer Richtung zwischen zwei Lagern der zumindest zwei Lager angeordnet ist. Die Innenverzahnung kann, bevorzugt bereichsweise oder vollständig, zwischen den zwei axialen Rändern des Rads angeordnet sein. Die Planetenräder können mit der Innenverzahnung und/oder mit einer Außenverzahnung des Sonnenrads zwischen den zwei Lagern der zumindest zwei Lager kämmen, vorzugsweise bereichsweise oder vollständig dazwischen. Die Planetenräder können in radialer Richtung zwischen zwei der zumindest zwei Lager hineinragen und zwischen diesen zwei Lagern das Hohlrad kämmen.

Der Antrieb weist eine elektromechanische Bremse auf. Beispielsweise ist die Bremse eingerichet, in einem bestromten Zustand gelöst zu sein/werden und vorzugsweise bei Reduktion des Stroms bis hin zum unbestromten Zustand blockiert zu werden. Die Bremse ist zum Bremsen des Sonnenrads und/oder einer das Sonnenrad bereitstellenden Antriebswelle des Elektromotors vorgesehen bzw. eingerichtet. Insbesondere ist die Bremse indirekt über das Planetengetriebe mit dem Rad und/oder direkt mit der Antriebswelle bzw. dem Sonnenrad wirkverbunden. Typischerweise ist die Bremse koaxial zu der Antriebswelle, zu dem Sonnenrad, und/oder zu dem Rad angeordnet.

Die Bremse kann in axialer Richtung gegenüberliegend zum Elektromotor angeordnet sein. Beispielsweise ist das Sonnenrad zwischen der Bremse und dem Elektromotor angeordnet. Die Bremse kann von einer Axialausnehmung des Planetengetriebes, insbesondere des Planetenradträgers, und/oder von dem Rad oder einer Felge des Rads aufgenommen sein, beispielsweise um zur Wartung leicht zugänglich zu sein und um den Antrieb kompakt zu halten. Die Bremse kann radseitig bzw. motorabgewandt zugänglich angeordnet sein. Die Bremse kann an einer radnahen bzw. motorabgewandten Seite angeordnet sein und/oder das Planetengetriebe kann, z.B. im Wesentlichen bzw. bereichsweise, zwischen Bremse und Elektromotor angeordnet sein.

Ein Rotor der Bremse kann drehmomentübertragend auf die Antriebswelle aufgesteckt sein bzw. drehmomentübertragend mit der Antriebswelle, beispielsweise mit einem Mitnehmer bzw. mit einem Bauteil der Antriebswelle, verbunden sein. Insbesondere ist der Rotor direkt mit der Antriebswelle verbunden. Der Rotor der Bremse ist vorzugsweise formschlüssig mit der Antriebswelle bzw. dem Sonnenrad verbunden. Beispielsweise kann eine Steckverzahnung zur Drehmomentübertragung vorgesehen sein. Beispielsweise können Rotor und Antriebswelle aneinander verschraubt sein.

Alternativ oder ergänzend kann der Rotor über eine Passfederverbindung mit der Antriebswelle bzw. dem Sonnenrad drehmomentübertragend verbunden sein. Hierzu können der Rotor der Bremse und die Antriebswelle jeweils eine Passfedernut aufweisen, in die eine Passfeder eingesetzt ist. Die Passfederverbindung ermöglicht eine möglichst spielarme oder spielfreie Verbindung, die vergleichsweise leicht herzustellen ist.

Die Bremse kann eine Federkraftbremse bzw. Federdruckbremse sein. Der Rotor der Bremse kann einen oder mehrere Reibbeläge aufweisen bzw. tragen. Die Bremse kann eine Ankerscheibe und zumindest eine Feder, beispielsweise Tellerfeder, aufweisen. Der Reibbelag kann zwischen der Ankerscheibe mit der zumindest einen Feder und einem Flansch, insbesondere Flansch des Elektromotors, eingespannt sein. Die zumindest eine Feder kann insbesondere in einem unbestromten Zustand einer Spule gegen die Ankerscheibe drücken. Wird die Spule bestromt, wird die Ankerscheibe entgegen der Federkraft angezogen, um den Rotor bzw. Reibbelag freizugeben.

Alternativ oder zusätzlich kann vorgesehen sein, dass der Planetenradträger relativ zu einem/dem Motorgehäuse und/oder zu der Bremse festgelegt bzw. daran festgelegt ist, beispielsweise an dem Motorgehäuse und/oder der Bremse befestigt bzw. damit verbunden ist, insbesondere über einen Lagerschild des Antriebs, daran befestigt bzw. verbunden ist. Beispielsweise ist der Planetenradträger mit dem Motorgehäuse bzw. mit der Bremse, bevorzugt jeweils direkt oder indirekt, verbunden, beispielsweise verschraubt oder einstückig damit ausgebildet. Der Lagerschild ist beispielsweise zwischen dem Planetengetriebe und dem Motor angeordnet und insbesondere zur Lagerung einer Antriebswelle eingetrichtet. Der Lagerschild kann als Flansch eingerichtet sein. Beispielsweise kann der Planetenradträger ein im Wesentlichen feststehender Teil des Planetengetriebes bzw. des Antriebs sein. Anders gesagt, beispielsweise, kann der Planetenradträger feststehend mit der Bremse und/oder dem Motorgehäuse, verbunden sein.

Alternativ oder zusätzlich kann vorgesehen sein, dass das Rad die Bremse umgibt und/oder dass die Bremse zwischen den zwei axialen Rändern des Rades angeordnet ist, insbesondere in der Axialausnehmung. Es kann ein Nabendeckel zur Abdeckung der Bremse vorgesehen sein. Der Nabendeckel kann an einer Felge und/oder an dem Planetenradträger festgelegt, insbesondere verschraubt, sein. Insbesondere befindet sich die Bremse in Radnähe und kann außenseitig zugänglich sein. Anders gesagt, beispielsweise, kann ein Deckel an der Felge einen Serviceaustausch der Bremse ermöglichen. Diese Bauweise schützt die Bremse außerdem vor äußeren Einflüssen und reduziert den Wartungsaufwand.

Alternativ oder zusätzlich kann vorgesehen sein, dass das Hohlrad eine insbesondere außenliegende Kontaktfläche aufweist. Die Kontaktfläche ist insbesondere zur Übertragung einer Stützlast bzw. radialen Last vorgesehen. Die Kontaktfläche ist vorzugsweise zumindest abschnittsweise zylindrisch und/oder konvex um die Drehachse des Sonnenrads geformt und/oder zur Verbindung mit dem Rad, insbesondere mit einer Felge des Rads, die einen Radbelag tragen kann, vorgesehen bzw. ausgebildet ist. Die Kontaktfläche kann die zumindest zwei Lager umgeben und/oder radial außerhalb von den zumindest zwei Lagern angeordnet sein. Die Kontaktfläche stellt eine Verbindungsmöglichkeit zur Anbindung des Rads bereit und ermöglicht beispielsweise einen leichten Austausch.

Das Rad kann einen/den Radbelag und insbesondere eine/die Felge aufweisen. Das Rad bzw. die Felge kann drehmomentübertragend mit dem Hohlrad verbunden sein. Beispielsweise kann ein Radbelag auf eine/die Felge aufgezogen, mit der Felge verklebt und/oder an die Felge angespritzt bzw. anvulkanisiert oder aufvulkanisiert sein. Der Radbelag kann kraftschlüssig, stoffschlüssig und/oder formschlüssig mit der Felge bzw. mit dem Hohlrad verbunden sein, insbesondere direkt oder indirekt.

Alternativ oder zusätzlich kann es vorgesehen sein, dass das Rad oder eine/die Felge des Rads eine das Hohlrad kontaktierende Innenfläche aufweist. Die Innenfläche kann mehrere in das Hohlrad eingreifende Vorsprünge aufweisen. Die Kontaktfläche kann mehrere in die Innenfläche eingreifende Vorsprünge aufweisen. Die Vorsprünge können einen Formschluss zur Kraftübertragung beim Antreiben eines Fahrzeugs bereitstellen. Die meheren Vorsprünge können monolithisch mit der Innenfläche bzw. mit der Kontaktfläche ausgebildet sein. Die mehreren vorsprünge erstrecken sich vorzugsweise längs einer axialen Richtung.

Die Aufgabe wird weiter durch die Verwendung von einem Antrieb oder von mehreren Antrieben als Radantrieb(e) und/oder Radnabengetriebemotoren eines fahrerlosen Transportfahrzeugs, regelmäßig als FTS bzw. fahrerloses Transportsystem abgekürzt, insbesondere zum Antreiben des Transportfahrzeugs, gelöst. Bei dem Antrieb bzw. den mehreren Antrieben handelt es sich insbesondere um den vorbeschriebenen Antrieb. Die Verwendung zeichnet also aus, dass der Antrieb als Radantrieb bei einem fahrerlosen Transportfahrzeug angebracht ist und insbesondere zum Antreiben genutzt wird.

Die Aufgabe wird weiter durch ein fahrerloses Transportfahrzeug mit mehreren Antrieben, insbesondere mit einem oder mehreren der vorbeschriebenen Antriebe, gelöst.

Das Transportfahrzeug kann eine Batterie bzw. Fahrbatterie aufweisen, die elektrische Energie speichern kann. Der Antrieb kann mit der Batterie stromübertragend verbunden sein.

Soweit Ordnungszahlen, z. B. "erste", "zweite" usw., zur Bezeichnung einer Komponente bzw. eines Elements verwendet werden, dienen diese Ordnungszahlen allein dem Zweck der Unterscheidung in der Bezeichnung und zeigen keine Abhängigkeiten oder Reihenfolgen an. Dies bedeutet insbesondere, dass beispielsweise eine Vorrichtung nicht zwingend eine "erste Komponente" aufweisen muss, um eine "zweite Komponente" aufweisen zu können. Ebenso kann eine Vorrichtung eine "erste Komponente" sowie eine "dritte Komponente" aufweisen, ohne zwingend eine "zweite Komponente" zu haben. Es kann auch mehrere Einheiten derselben Ordnungszahl geben, beispielsweise mehrere "erste Komponenten".

Im Rahmen der Offenbarung steht die Abkürzung "bzw." als eine Kurzform für "beziehungsweise" und soll grundsätzlich alternative, im Grunde gleichwertige und/oder synonyme Merkmale oder Begriffe angeben, um die Idee bzw. den Sinn einer Merkmals- oder Begriffsverwendung näher zu bringen. "Beziehungsweise" und "oder" können stets mit "und/oder" ersetzt werden.

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1-3: ein erfindungsgemäßer Antrieb in perspektivischen Ansichten,
- Fig. 4A-B: der Antrieb in Schnittansichten, und
- Fig. 5: ein Transportfahrzeug mit Antrieben in schematischer Ansicht.

Bei in den Figuren verwendeten gleichen Bezugszeichen gilt die nachfolgende Beschreibung entsprechend für die Figuren untereinander. Beschrieben sind Beispiele, die im Rahmen der Ansprüche in verschiedenen Weisen modifiziert und/oder ergänzt werden können. Jedes Merkmal, das für ein bestimmtes Beispiel beschrieben wird, kann unabhängig oder in Kombination mit anderen Merkmalen in jedem anderen Beispiel verwendet werden. Jedes Merkmal, das für ein Beispiel einer bestimmten Anspruchskategorie beschrieben wird, kann auch in entsprechender Weise in einem Ausführungsbeispiel, beispielsweise einer anderen Anspruchskategorie bzw. einem anderen Aspekt der Erfindung, verwendet werden.

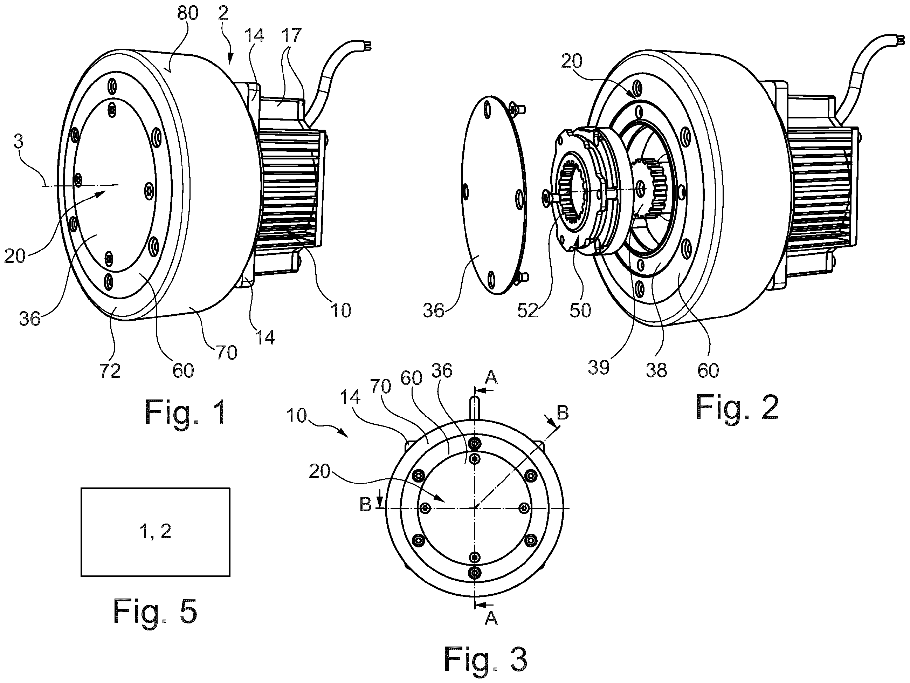

Fig. 1, Fig. 2 und Fig. 3 zeigen einen Antrieb 2 bzw. Radnabengetriebemotor für ein radangetriebenes Fahrzeug 1. Der Antrieb 2 weist einen Elektromotor 10 mit einem Motorgehäuse 17 und ein mit dem Elektromotor 10 insbesondere über ein Lagerschild 14 verbundenes Planetengetriebe 20 auf. Mit dem Planetengetriebe 20 ist weiter ein Rad 70 des Antriebs 2 verbunden, das direkt auf einem Untergrund aufstehen kann. Der von einer Felge 60 getragene Radbelag 71 des Rads 70 stellt zwischen seinen Rändern 72 eine zumindest im Wesentlichen zylindrische Außenfläche bzw. Lauffläche bzw. eine im Wesentlichen glatte oder profilierte Aufstandsfläche 80 bereit. Eine Drehachse 3 des Antriebs 2 ist zumindest im Wesentlichen parallel zum Untergrund auszurichten bzw. ausgerichtet.

Mit Blick auf Fig. 2 ist eine Explosionsansicht gezeigt, wobei ein an der Felge 60 insbesondere in einem Rücksprung 38 zu befestigender Nabendeckel 36 von der Felge 60 beabstandet dargestellt ist. Weiter ist eine als Federkraftbremse ausgebildete Bremse 50 mit einem Rotor 52 beabstandet von der Felge 60 bzw. vom Planetengetriebe 20 dargestellt. Die Bremse 50 ist zur Befestigung an einem in Fig. 2 nicht näher gezeigten Planetenradträger 30 des Getriebes vorgesehen. Der Rotor 52 ist ausgebildet, um einen Formschluss mit einem Bauteil 39 bzw. einem Mitnehmer des Planetengetriebes 20 einzugehen, so dass ein elektrisch schaltbarer Bremsvorgang durchgeführt werden kann, um das Getriebe zum Stillstand zu bringen bzw. zu fixieren. Vorliegend ist das Bauteil 39 außenverzahnt und der Rotor 52 innenverzahnt, wobei die Verzahnungen zur Übertragung von Drehmoment um die Drehachse 3 ineinander greifen. Das Bauteil 39 ist zur Rotation um die Drehachse 3 formschlüssig mit einer Antriebswelle 12 verbunden, insbesondere daran verschraubt und/oder darauf aufgesetzt.

Die Bremse 50 ist typischerweise ausgebildet, um in einem bestromten Zustand gelöst zu sein und in einem unbestromten Zustand blockiert zu sein, beispielsweise so dass bei einem Stromausfall ein Nothalt erfolgt.

Fig. 3 zeigt eine Vorderansicht mit Blick auf die Drehachse 3. Ersichtlich umgibt das Rad 70 das Planetengetriebe 20. Das Rad 70 weist den Radbelag 71 auf, der direkt an der Felge 60 festgelegt ist, beispielsweise formschlüssig und/oder kraftschlüssig, insbesondere darauf vulkanisiert. Die Felge 60 ist direkt an einem in Fig. 3 nicht näher gezeigten Hohlrad 24 festgelegt, beispielsweise formschlüssig. Der Nabendeckel 36 bedeckt die in Fig. 3 nicht näher gezeigte Bremse 50 und bereichsweise das Planetengetriebe 20. Hintergründig ist ein Teil des Lagerschildes 14 des Motors 10 ersichtlich, wobei das Lagerschild 14 am Planetengetriebe 20 festgelegt ist und dieses, insbesondere öldicht, verschließt.

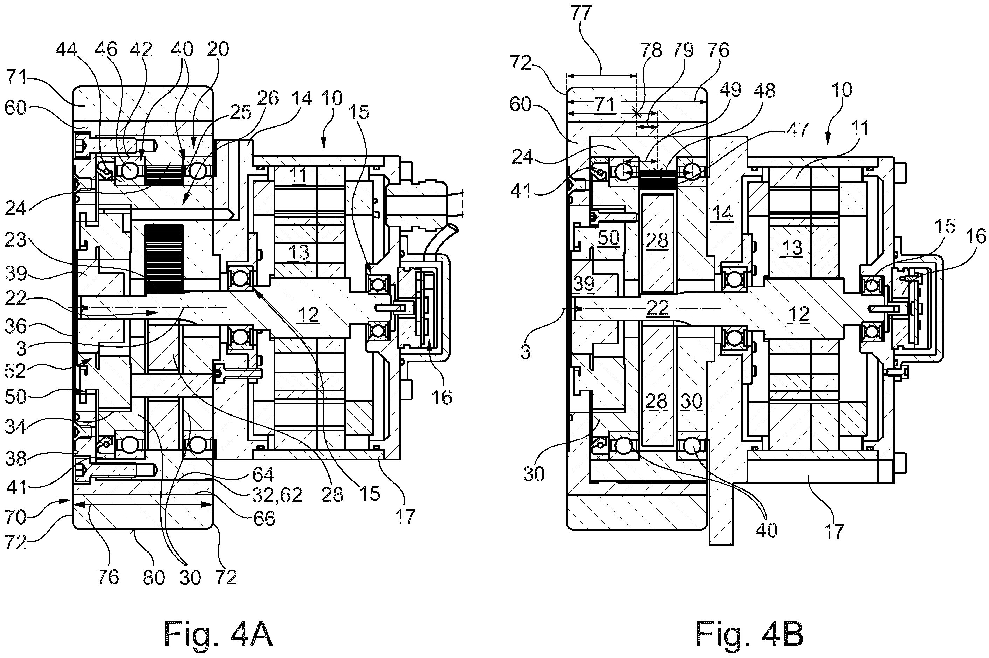

Fig. 3 indiziert weiter die Schnittansichten, und zwar bei A-A die Schnittansicht der Fig. 4A und bei B-B die Schnittansicht der Fig. 4B.

Mit Blick auf Fig. 4A-B ist der Antrieb 2 für ein radangetriebenes Fahrzeug im Schnitt ersichtlich. Der Antrieb 2 umfasst das Planetengetriebe 20, das ein Sonnenrad 22, das Hohlrad 24, den Planetenradträger 26 sowie von dem Planetenradträger 26 getragene und mit dem Sonnenrad 22 und dem Hohlrad 24 kämmende Planetenräder 28 aufweist.

Der Antrieb 2 weist weiter den Elektromotor 10 mit einer Antriebswelle 12 zum Antreiben des Sonnenrads 22 auf. Dabei ist das Sonnenrad 22 einstückig mit der Antriebswelle 12 bereitgestellt. Mit der Antriebswelle 12 bzw. mit dem Sonnenrad 22 drehfest verbunden ist ferner das Bauteil 39, das im Eingriff mit dem Rotor 52 der Bremse 50 steht. Die Antriebswelle 12 ist vorliegend über zumindest ein Lager 15, insbesondere Wälzlager, vorliegend sind es zwei Lager 15, im Motorgehäuse 17 bzw. in dem Lagerschild 14 um dire Drehachse 3 drehbar gelagert. Eines der zwei Lager 15 befindet sich in axialer Richtung im Wesentlichen zwischen dem und und dem Planetengetriebe 20.

Im befindet sich ein die Antriebswelle 12 umgebender Rotor 13, der von einem Stator 11 des Motors 11 in Rotation versetzt werden kann. Der weist ferner einen mit der Antriebswelle 12 wirkverbundenen Drehgeber 16 auf.

Ersichtlich ist das Rad 70 bzw. die Felge 60 mit dem Hohlrad 24 drehfest verbunden. Genauer gesagt ist der Radbelag 71 mit der Felge 60 drehfest verbunden und die Felge ist mit dem Hohlrad 24 drehfest verbunden

Der Antrieb weist zwei Lager 40 auf, die zur Lagerung des Hohlrads 24 auf dem Planetenradträger 26 dienen. Jedes der zwei Lager 40 weist einen am Hohlrad 24 anliegenden Außenring 42, einen am Planetenradträger 26 anliegenden Innenring 44 und zwischen Außenring 42 und Innenring 44 angeordnete Wälzkörper 46, beispielsweise Tonnen, Kugeln, Nadeln oder dergleichen, auf.

Der Planetenradträger 26 ist mit zwei Wangen 30 ausgeführt, wobei auf beiden Wangen 30 des Planetenradträgers 26 eines der zwei Lager 40 angeordnet ist. Genauer gesagt ist jeweils einer der Innenringe 44 auf einer der Wangen 30 angeordnet.

Ersichtlich sind beide Lager 40 in Richtung längs der Drehachse 3 zwischen den zwei axialen Rändern 72 des Rads 70 angeordnet. Insbesondere befindet sich eine zwischen allen Lagern der zwei Lager 40 befindliche erste axiale Mitte 47 zwischen den zwei axialen Rändern 72.

Die erste axiale Mitte 47 ist von beiden Lagern 40 um einen Abstand 49 beabstandet, der zumindest im Wesentlichen einer Hälfte des Abstands 48 zwischen den Lagern 40 entspricht. Zwei Mal der Abstand 49 ergibt beispielsweise den Abstand 48.

Die erste axiale Mitte 47 stimmt im Wesentlichen mit einer zweiten axialen Mitte 78 des Rads 70 überein. Vorliegend sind die erste 47 und die zweite 78 axiale Mitte längs der Drehachse 3 voneinander um einen Abstand 79 beabstandet. Der Abstand 79 entspricht einem Anteil an der axialen Breite 79 von ca. 16 % bzw. höchstens 20 %. Anders gesagt ist die erste axiale Mitte 47 um höchstens 20 % der axialen Breite 76 von der zweiten axialen Mitte 78 abseits positioniert.

Die zweite axiale Mitte 78 weist längs der Drehachse 3 einen Abstand 77 zum Rand 72 auf, der zumindest im Wesentlichen der Hälfte des Abstands 76 entspricht. Zwei Mal der Abstand 77 ergibt beispielsweise den Abstand 76.

Eine Innenverzahnung 25 des Hohlrads 24 ist in axialer Richtung bzw. längs der Drehachse 3 zwischen den zwei Lagern 40 angeordnet. Die Planetenräder 28 kämmen mit der Innenverzahnung 25 und mit einer Außenverzahnung 23 des Sonnenrads 22 jeweils zwischen den zwei Lagern 40.

Die elektromechanische Bremse 50 dient zum Bremsen des Sonnenrads 22 und der das Sonnenrad 22 bereitstellenden Antriebswelle 12 des Elektromotors 12. Die Bremse 50 ist in axialer Richtung gegenüberliegend zum Elektromotor 10 angeordnet. Das Sonnenrad 22 ist zwischen der Bremse 50 und dem Elektromotor 10 angeordnet. Der Rotor 52 ist drehmomentübertragend auf das Bauteil 39 der Antriebswelle 12 aufgesteckt.

Der Rotor 52 kann über eine Passfederverbindung 39 mit der Antriebswelle 12, insbesondere dem Bauteil 39, verbunden sein. Die Bremse 50 bzw. der Rotor 52 ist direkt mit der Antriebswelle 12 bzw. dem Bauteil 39 verbunden.

Die Bremse 50 ist von einer Axialausnehmung 34 des Planetengetriebes 20, genauer gesagt des Planetenradträgers 26, aufgenommen. Die Bremse 50 ist von der Felge 60 aufgenommen.

Die Bremse ist vom Rad 70 und insbesondere vom Radbelag 71 umgeben.

Der Planetenradträger 26 relativ zu dem Motorgehäuse 17 und zu der Bremse 50 festgelegt, insbesondere jeweils daran befestigt, z.B. verschraubt.

Das Rad 70 umgibt die Bremse 50. Die Bremse 50 ist ferner zwischen den zwei axialen Rändern 72 des Rads 70 angeordnet. Der Nabendeckel 36 ist zur Abdeckung der Bremse 50 vorgesehen und kann beispielsweise zur Wartung der Bremse 50 abgenommen, insbesondere aus dem Rücksprung 38 herausgenommen werden.

Das Hohlrad 24 weist eine Kontaktfläche 32 auf, die zumindest im Wesentlichen zylindrisch um die Drehachse des Sonnenrads 22 geformt ist und zur Verbindung mit der Felge 60 des Rads 70 vorgesehen ist. Die Kontaktfläche 32 umgibt die zwei Lager 40 und ist radial außerhalb von den zwei Lagern 40 angeordnet.

Die Felge 60 weist eine das Hohlrad 24 kontaktierende Innenfläche 62 mit mehreren in das Hohlrad 24 eingreifenden Vorsprüngen 64 auf. Die Vorsprünge 64 erstrecken sich vorliegend über weniger die gesamte axiale Breite 76 der Felge 60, insbesondere über weniger als 50 % der axialen Breite 76 der Felge 60.

Die Felge 60 weist eine Außenfläche 66 auf, an der der Radbelag 71 direkt und insbesondere kraftübertragend anliegt.

Vorliegend ist die Felge 60 in axialer Richtung auf das Hohlrad 24 aufgesetzt bzw. aufgesteckt, wobei die Vorsprünge 64 einen um die Drehachse 3 wirkenden Formschluss zwischen Felge 60 und Hohlrad 24 bereitstellen. Ersichtlich ist die Felge 60 in axialer Richtung am Hohlrad 24 festgelegt, insbesondere verschraubt.

Das Planetengetriebe 20 ist vorliegend mit einem Schmierstoff gefüllt. Insoweit ist der Antrieb 2 bereichsweise fluiddicht ausgebildet, um den Schmierstoff im Planetengetriebe zu halten. Hierzu ist einerseits eine Dichtung 41 zwischen Felge 60 und einem der Lager 40 angeordnet. Die Dichtung 41 grenzt vorliegend an eines der zwei Lager 40 an. Andererseits ist das Motorgehäuse 14 insbesondere über den Lagerschild 14 abdichtend am Planetengetriebe 20 festgelegt, wobei eine Drehdurchführung für die Antriebswelle 12 mit einem der Lager 15 abgedichtet ausgeführt ist.

Fig. 5 zeigt ein fahrerloses Transportfahrzeug 1, das mit mehreren der vorbeschriebenen Antriebe 2 als Radantriebe ausgestattet ist. Die Antriebe 2 werden insoweit als Radantriebe verwendet, und zwar insbesondere zum Antreiben des Transportfahrzeugs 1. Die Antriebe 2 weisen jeweils ein Rad auf, die auf einem Untergrund aufstehen. Elektromotoren der Antriebe 2, insbesondere deren Motorgehäuse, sind dabei an einem Chassis o.ä. des Transportfahrzeugs 1 drehfest festgelegt. Die Antriebe 2 können durch eine Batterie des Transportfahrzeugs 1 bestromt werden, einerseits um Bremsen der Antriebe 2 zu lösen und andererseits zum Antreiben des Transportfahrzeugs 1.

Dargestellt und beschrieben ist eine Verwendung mehrerer Antriebe 2 als Radnabengetriebemotoren eines fahrerlosen Transportfahrzeugs 1. Wenn das fahrerlose Transportfahrzeug 1 aus eigener Kraft bewegt wird, werden die Antriebe 2 zum Antreiben des Transportfahrzeugs 1 verwendet.

Dargestellt und beschrieben sind Antriebe 2, insbesondere Nabengetriebemotoren, auf die beispielsweise folgendes zutrifft:
Die Lager 40 bzw. Abtriebslager sind so angeordnet, dass die Mitte der Lager 40 längs der Drehachse 3 zwischen 60 % und 70 % der Breite der Radaufstandsfläche bzw. des Abstands 76 liegt. Insbesondere liegt die Mitte der zwei Lager 40 (siehe bei Bezugszeichen 48) bei ca. 65 % der Breite der Radaufstandsfläche bzw. des Abstands 76, vgl. Fig. 4A-B.

Es werden Standard-Rillenkugellager verwendet werden und es können hohe Stützlasten bzw. Radiallasten aufgebracht werden. Eine hohe Radiallast lässt einen hohen Anpressdruck des Rads 70 auf den Boden zu und schafft damit kürzere Bremswege. Dies ermöglicht kleinere Schutzfeldzonen und damit eine höhere Fahrgeschwindigkeit des mit dem Antrieb 2 versehenen Transportfahrzeugs 1.

Der Abtrieb des Planetengetriebes 20 ist das Hohlrad 24, das direkt mit der Felge 60 verbunden ist. Es wird ein großer radialer Bauraum ausgenutzt, indem Felge 60 und Hohlrad 24 in axialer Richtung ineinandergesteckt sind.

Der feststehende Planetenradträger 26 ist im radnahen Bereich bzw. nahe beim Rad 70 mit der Bremse 50 verbunden. Die Bremse 50 kann über einen Deckel bzw. den Nabendeckel 36 ausgetauscht werden, selbst wenn der betreffende Antrieb 1 im fahrbereiten Transportfahrzeug 1 eingebaut ist. Dies vereinfacht die Wartung. Der Antrieb 1 ist für den Einsatz als FTS-Fahrantrieb ausgelegt.

### Bezugszeichenliste

- 1: Transportfahrzeug
- 2: Antrieb
- 3: Drehachse

- 10: Elektromotor
- 11: Stator
- 12: Antriebswelle
- 13: Rotor
- 14: Lagerschild
- 15: Lager
- 16: Drehgeber
- 17: Motorgehäuse

- 20: Planetengetriebe
- 22: Sonnenrad bzw. Sonnenverzahnung
- 23: Außenverzahnung
- 24: Hohlrad
- 25: Innenverzahnung
- 26: Planetenradträger
- 28: Planetenrad
- 30: Wange des Planetenradträgers
- 32: Kontaktfläche des Hohlrads
- 34: Axialausnehmung
- 36: Nabendeckel
- 38: Rücksprung
- 39: Bauteil

- 40: Lager
- 41: Dichtung
- 42: Außenring
- 44: Innenring
- 46: Wälzkörper
- 47: erste Mitte
- 48: Abstand
- 49: halber Abstand

- 50: Elektromechanische Bremse
- 52: Rotor der Bremse

- 60: Felge
- 62: Innenfläche
- 64: Vorsprung
- 66: Außenfläche

- 70: Rad
- 71: Radbelag
- 72: Rand
- 76: Breite
- 77: halbe Breite
- 78: zweite Mitte
- 79: Abstand
- 80: Aufstandsfläche

## Patentansprüche

1. Antrieb (2) für ein radangetriebenes Fahrzeug, der Antrieb (2) aufweisend
ein Planetengetriebe (20) mit einem Sonnenrad (22), einem Hohlrad (24), einem Planetenradträger (26) und von dem Planetenradträger (26) getragene und mit Sonnenrad (22) und Hohlrad (24) kämmende Planetenräder (28);
einen Elektromotor (10) zum Antreiben des Sonnenrads (22);
ein mit dem Hohlrad (24) drehfest verbundenes Rad (70); und
eine elektromechanische Bremse (50) zum Bremsen des Sonnenrads (22) und/oder einer das Sonnenrad (22) bereitstellenden Antriebswelle (12) des Elektromotors (12),
wobei das Sonnenrad (22) zwischen der Bremse (50) und dem Elektromotor (10) angeordnet ist und/oder die Bremse (50) von einer Axialausnehmung des Planetengetriebes (20) aufgenommen ist.

2. Antrieb (2) nach dem voranstehenden Anspruch, aufweisend
zumindest zwei Lager (40) zur Lagerung des Hohlrads (24) auf dem Planetenradträger (26).

3. Antrieb (2) nach dem voranstehenden Anspruch, wobei
der Planetenradträger (26) mit zwei Wangen (30) ausgeführt ist und auf beiden Wangen (30) des Planetenradträgers (26) eines der zumindest zwei Lager (40) angeordnet ist.

4. Antrieb (2) nach einem der voranstehenden zwei Ansprüche, wobei
zumindest eines der zumindest zwei Lager (40) zwischen zwei axialen Rändern (72) des Rads (70) angeordnet ist, und optional
eine zwischen allen Lagern der zumindest zwei Lager (40) befindliche erste axiale Mitte (47) zwischen den zwei axialen Rändern (72) des Rads (70) angeordnet ist.

5. Antrieb (2) nach dem voranstehenden Anspruch, wobei
die erste axiale Mitte (47) mit einer zweiten axialen Mitte (78) des Rads (70) zumindest im Wesentlichen übereinstimmt, bevorzugt um höchstens 20 % einer axialen Breite (76) des Rads (70) von der zweiten axialen Mitte (78) abseits positioniert ist.

6. Antrieb (2) nach einem der voranstehenden vier Ansprüche, wobei
eine Innenverzahnung (25) des Hohlrads (24) in axialer Richtung zwischen zwei Lagern (40) der zumindest zwei Lager (40) angeordnet ist, und
die Planetenräder (28) mit der Innenverzahnung (25) und mit einer Außenverzahnung (23) des Sonnenrads (22) zwischen den zwei Lagern (40) der zumindest zwei Lager (40) kämmen.

7. Antrieb (2) nach einem der voranstehenden Ansprüche, wobei
ein Rotor der Bremse (52) drehmomentübertragend auf die Antriebswelle (12) aufgesteckt ist.

8. Antrieb (2) nach einem der voranstehenden Ansprüche, wobei
ein/der Rotor der Bremse (52) über eine Passfederverbindung mit der Antriebswelle (12) verbunden ist.

9. Antrieb (2) nach einem der voranstehenden Ansprüche, wobei
der Planetenradträger (26) relativ zu einem Motorgehäuse (14) und optional der Bremse (50) festgelegt ist, insbesondere mit dem Motorgehäuse (14) und optional der Bremse (50) verbunden ist.

10. Antrieb (2) nach einem der voranstehenden Ansprüche, wobei
das Rad (70) die Bremse (50) umgibt und die Bremse (50) zwischen (den) zwei axialen Rändern (72) des Rads (70) angeordnet ist.

11. Antrieb (2) nach einem der voranstehenden Ansprüche, aufweisend
einen Nabendeckel (36) zur Abdeckung der Bremse (50).

12. Antrieb (2) nach einem der voranstehenden Ansprüche, wobei
das Hohlrad (24) eine Kontaktfläche (32) zur Übertragung einer Stützlast aufweist, die zumindest abschnittsweise zylindrisch um die Drehachse des Sonnenrads (22) geformt ist und zur Verbindung mit einer Felge (60) des Rads (70) vorgesehen ist, und
die Kontaktfläche (32) die zumindest zwei Lager (40) umgibt und/oder radial außerhalb von den zumindest zwei Lagern (40) angeordnet ist.

13. Antrieb (2) nach einem der voranstehenden Ansprüche, wobei
das Rad (70), insbesondere eine/die Felge (60) des Rads (70), eine das Hohlrad (24) kontaktierende Innenfläche (62) aufweist,
die Innenfläche (62) mehrere in das Hohlrad (24) eingreifende Vorsprünge (64) aufweist, und
die Vorsprünge (64) sich über weniger als 50 % einer axialen Breite (76) der Felge (60) erstrecken.

14. Verwendung mehrerer Antriebe (2) nach einem der Ansprüche 1 bis 13 als Radantriebe bzw. Radnabengetriebemotoren eines fahrerlosen Transportfahrzeugs (1), insbesondere zum Antreiben des Transportfahrzeugs (1).

15. Fahrerloses Transportfahrzeug (1) mit mehreren Antrieben (2) nach einem der Ansprüche 1 bis 13.
